# EUROPEAN PATENT APPLICATION

(11) **EP 4 817 706 A1**
(43) Date of publication of application: **07.10.2026**
(21) Application number: 26166078.1
(22) Date of filing: 19.03.2026
(51) Int. Cl.: A63F 13/23, A63F 13/54, G06F 3/16, H04R 5/04

(54) **GAME APPARATUS, GAME SYSTEM, AND GAME AUDIO OUTPUT METHOD**

(30) Priority: 01.04.2025 JP 2025060482
(71) Applicant: Nintendo Co., Ltd., Kyoto-shi, Kyoto 601-8501 (JP)
(72) Inventor: ONISHI, Masato, Kyoto, 601-8501 (JP); KATO, Shiro, Kyoto, 601-8501 (JP); KOMADA, Yu, Kyoto, 601-8501 (JP); IWAI, Yuma, Kyoto, 601-8501 (JP); SEKINE, Ayumu, Kyoto, 601-8501 (JP); MATSUMOTO, Tatsuya, Kyoto, 601-8501 (JP); TAKEUCHI, Hiroyuki, Kyoto, 601-8501 (JP); HIGASHIZONO, Takumi, Kyoto, 601-8501 (JP); YASUDA, Shumpei, Kyoto, 601-8501 (JP); NARUSE, Fumisato, Kyoto, 601-8501 (JP)
(74) Representative: Bardehle Pagenberg Partnerschaft mbB Patentanwälte Rechtsanwälte

(57) **Abstract**

A game apparatus of the present disclosure is a game apparatus connected by wire or wirelessly to a controller to which an audio output device is connectable, the game apparatus performing game processing in response to an input signal from the controller. The game apparatus comprises: an audio signal output circuit that outputs an audio signal, and a connection state detector that detects a connection state between the controller and the audio output device. The audio signal output circuit is configured to restrict an output of the audio signal when the connection state detector detects that a connection between the controller and the audio output device is disconnected while the audio signal is being output, and remove the restriction on the output of the audio signal when a predetermined condition is satisfied.

## Description

### TECHNICAL FIELD

The present disclosure relates to a game apparatus that is connected to, with a wire or wirelessly, a controller connectable to an audio output device and performs game processing in response to an input signal from the controller, a game system including the game apparatus, and a game audio output method.

### BACKGROUND ART

A controller for a known game apparatus can be disconnected from an audio output device such as headphones during audio playback due to, for example, no charge in the battery in the controller. Such a known game apparatus may include automatic audio mute setting to avoid a sudden audio output from the game apparatus or a display device such as a television connected to the game apparatus.

A known sound reproducer connectable to an audio output device such as headphones is described in, for example, Patent Literature 1 (Japanese Unexamined Patent Application Publication No. 2002-10389). The technique described in Patent Literature 1 mutes a volume level immediately after the headphones are removed from the reproducer and then causes the volume level to automatically return to normal.

### CITATION LIST

### PATENT LITERATURE

Patent Literature 1: JP-A-2002-10389

### SUMMARY OF THE INVENTION

### PROBLEMS TO BE SOLVED BY THE INVENTION

In recent years, a variety of games have been developed for playing on a game apparatus. Different controllers may be used for different games. When the game being played is switched to another game, a controller having been used may no longer support the other game and may be disconnected from the game apparatus. In another situation, the user may disconnect a controller from a game apparatus to cause the game apparatus or a speaker in another apparatus to output an audio. Further, a switching time, or a temporal disconnection between the controller and the game apparatus, can occur when their connection is switched from with a wire to wireless. In other words, the game apparatus and the controller may be disconnected due to multiple causes, including no charge in the battery in the controller. When the audio is muted in response to a disconnection between the game apparatus and the controller, the user may be unable to identify the cause. In this situation, the user may have difficulty unmuting the audio, possibly causing the audio to be unmuted to output the audio at an inappropriate and unintended time.

One or more aspects of the present disclosure are directed to a game apparatus, a game system, and a game audio output method that can output audio at a more appropriate time.

### SOLUTIONS TO THE PROBLEMS

In response to the above, one or more aspects of the present invention may have, for example, the structures according to (1) to (11) below.

(1)
A game apparatus according to an aspect of the present disclosure is configured to connect via a wired or wireless connection to a controller connectable to an audio output device to perform game processing in response to an input signal from the controller. The game apparatus includes
an audio signal output circuit configured to output an audio signal, and
a connection state detector configured to detect a connection state of the controller to the audio output device.

During an output of the audio signal, the audio signal output circuit restricts the output of the audio signal in response to the connection state detector detecting a disconnection between the controller and the audio output device.

The audio signal output circuit removes restriction on the output of the audio signal in response to a predetermined condition being satisfied.

According to the structure (1), the audio signal output circuit removes the restriction on the output of the audio signal in response to the predetermined condition being satisfied. This allows an audio output at a more appropriate time.

(2)
In the structure (1), the controller does not include an input circuit that indicates restriction on an output of the audio signal or removal of the restriction.

(3)
In the structure (1) or (2), after restricting the output of the audio signal, the audio signal output circuit may remove the restriction on the output of the audio signal in response to the connection state detector detecting a connection of the controller to the audio output device and receiving an input signal from the controller.

Many users are concerned more about the situation in which they can no longer continue playing a game than the situation in which the audio is no longer output. When, for example, such a user cannot continue the game due to no charge in the battery in the controller, they often prioritize an action to restart the game, such as charging the battery in the controller.

According to the structure (3), the audio signal output circuit removes the restriction on the output of the audio signal in response to a connection of the controller to the audio output device and to an operation on the controller after, for example, the battery in the controller is charged. This allows an audio output at any time at which the user intends to restart the game without particularly paying attention to removing the restriction on an audio output.

(4)
In the structure (1) or (2), after restricting the output of the audio signal, the audio signal output circuit may remove the restriction on the output of the audio signal in response to the connection state detector detecting a connection of another controller different from the controller to the audio output device and to a reception of an input signal from the other controller.

When, for example, the user cannot continue a game due to no charge in the battery in the controller, the user may use another charged controller to restart the game.

According to the structure (4), the audio signal output circuit removes the restriction on the output of the audio signal in response to a connection of the other controller to the audio output device and to an operation on the other controller. This allows an audio output at any time at which the user intends to restart the game without particularly paying attention to removing the restriction on an audio output.

(5)
In the structure (1) or (2), the game apparatus may be connectable to another apparatus including a speaker that outputs audio in response to the audio signal.

After restricting the output of the audio signal, the audio signal output circuit may output the audio signal to the speaker in response to the connection state detector detecting no connection of another controller different from the controller to the audio output device and to a removal of the restriction on the output of the audio signal.

The other controller may be unconnectable to the audio output device although the user intends to restart the game using the other controller as described above.

According to the structure (5), the audio signal output circuit outputs an audio signal to the speaker in the other apparatus in response to a removal of the restriction on the output of the audio signal. This allows the speaker in the other apparatus to output audio at any time at which the user intends to restart the game.

(6)
In the structure (1) or (2), the game apparatus or another apparatus connectable to the game apparatus may include a speaker that outputs audio in response to the audio signal.

The audio signal output circuit may remove the restriction on the output of the audio signal in response to the connection state detector detecting a connection of the controller or another controller different from the controller to the audio output device before a predetermined time elapses from the restriction on the output of the audio signal. The audio signal output circuit may output the audio signal to the controller or the other controller.

The audio signal output circuit may remove the restriction on the output of the audio signal after an elapse of the predetermined time in response to no connection of the controller or the other controller to the audio output device being detected by the connection state detector before the predetermined time elapses from the restriction on the output of the audio signal. The audio signal output circuit may output the audio signal to the speaker.

According to the structure (6), the audio signal output circuit outputs the audio signal to the controller or the other controller in response to a connection of the controller or the other controller to the audio output device before the predetermined time elapses from the restriction on the output of the audio signal. The audio signal is output to the speaker included in the game apparatus or the other apparatus in response to no connection of the controller or the other controller to the audio output device being detected before the predetermined time elapses from the restriction on the output of the audio signal. This allows an audio output at a more appropriate time.

(7)
In the structure (1) or (2), the game apparatus may further include
a speaker that performs an audio output in response to the audio signal, and
a display.

After restricting the output of the audio signal, the audio signal output circuit may remove the restriction on the output of the audio signal in response to the connection state detector detecting a connection of the controller or another controller different from the controller to the audio output device and to a reception of an input signal from the controller or the other controller.

According to the structure (7), the audio signal output circuit removes the restriction on the output of the audio signal in response to a connection of the controller or the other controller to the audio output device and to an operation on the controller or the other controller. This allows an audio output at any time at which the user intends to restart the game without particularly paying attention to removing the restriction on an audio output.

(8)
In the structure (7), the game apparatus may further include a volume adjuster that adjusts a volume of the audio output.

After restricting the output of the audio signal, the audio signal output circuit may remove the restriction on the output of the audio signal and outputs the audio signal to the speaker in response the connection state detector detecting no connection of the controller and to a reception of an input signal from the volume adjuster. The audio signal output circuit may output the audio signal to the speaker.

According to the structure (8), the audio signal output circuit outputs an audio signal to the speaker in response to no connection of the controller or the other controller to the audio output device being detected after an elapse of the predetermined time and to an operation on the volume adjuster in the game apparatus. This allows the speaker in the game apparatus to output audio at a more appropriate time intended by the user.

(9)
In the structure (1) or (2),
the game apparatus may cause a display included in the game apparatus or a display device connected to the game apparatus to display information indicating restriction on an output of the audio signal or information indicating a method for removing the restriction in response to a disconnection of the audio output device from the controller connected to the audio output device.

According to the structure (9), the user can learn any restriction on the output of the audio signal or a method for removing the restriction on the output of the audio signal based on the information displayed on the display or the display device.

(10)
A game system according to an aspect of the present disclosure performs game processing in response to an input signal from a controller.

The game system includes a controller connectable to an audio output device, and
a game apparatus connectable to the controller with a wire or wirelessly.

The game apparatus includes
an audio signal output circuit that outputs an audio signal, and
a connection state detector that detects a connection state of the controller to the audio output device.

During an output of the audio signal, the audio signal output circuit restricts the output of the audio signal in response to the connection state detector detecting a disconnection between the controller and the audio output device.

The audio signal output circuit removes the restriction on the output of the audio signal in response to a predetermined condition being satisfied.

According to the structure (10), the audio signal output circuit removes the restriction on the output of the audio signal in response to the predetermined condition being satisfied. This allows an audio output at a more appropriate time.

(11)
A game audio output method according to an aspect of the present disclosure is for a game apparatus that is configured to connect via a wired or wireless connection to a controller connectable to an audio output device to perform game processing in response to an input signal from the controller.

The method includes restricting the output of the audio signal in response to the connection state detector detecting a disconnection of the controller from the audio output device while the game apparatus is outputting the audio signal, and removing the restriction on the output of the audio signal in response to a predetermined condition being satisfied.

In the method (11), the restriction on the output of the audio signal is removed in response to the predetermined condition being satisfied. This allows an audio output at a more appropriate time.

### EFFECTS OF THE INVENTION

The game apparatus, the game system, and the game audio output method according to the above aspects of the present disclosure can output audio at a more appropriate time.

### BRIEF DESCRIPTION OF DRAWINGS

Fig. 1 is a schematic diagram of a game system including a game apparatus according to an embodiment of the present disclosure, illustrating playing, with a controller, on the game apparatus connected to a display device.
Fig. 2 is a block diagram of the game system in Fig. 1.
Fig. 3 is a diagram of the game system in Fig. 1, illustrating playing a game on the game apparatus.
Fig. 4 is a diagram of the game system in Fig. 1, illustrating playing, with a set of controllers different from the controller in Fig. 1, a game on the game apparatus connected to the display device.
Fig. 5 is a flowchart of an example of a game audio output method according to the embodiment of the present disclosure.

### DETAILED DESCRIPTION

Embodiments of the present disclosure will now be described with reference to the accompanying drawings. The embodiments described below are mere examples and do not limit the scope of the present disclosure. The drawings are schematic and are not drawn to scale relative to the actual size of each component. Like reference numerals denote like functional components in the drawings, and such components will not be described.

### (Embodiments)

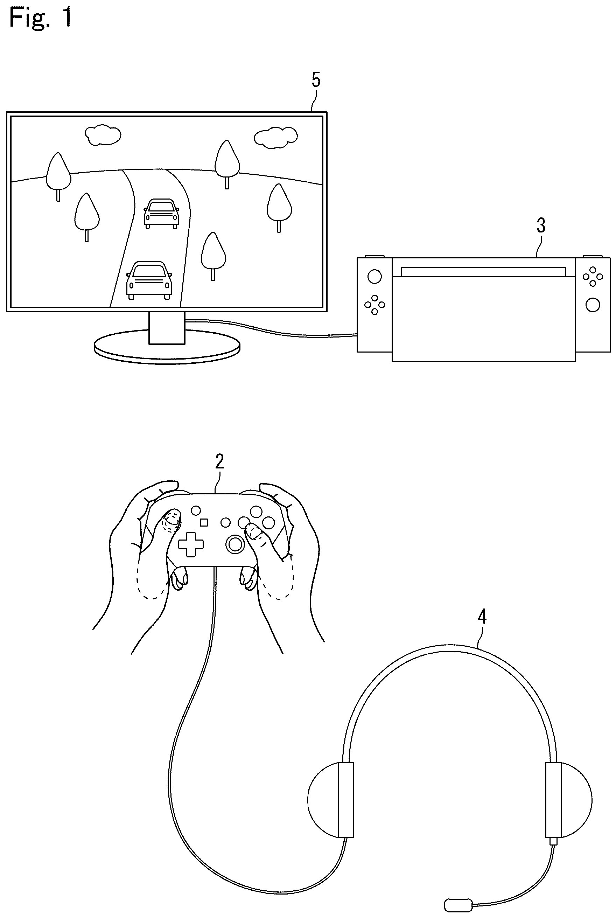

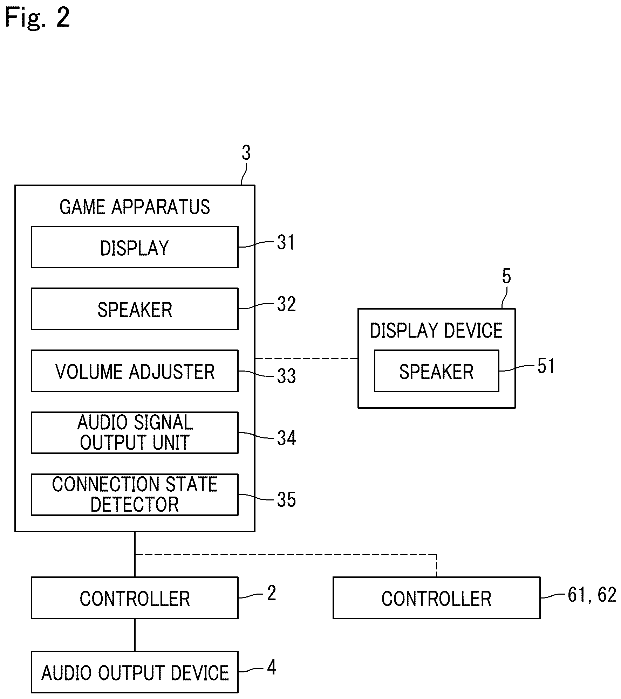

Fig. 1 is a schematic diagram of a game system including a game apparatus according to an embodiment of the present disclosure, illustrating playing a game on the game apparatus connected to a display device. Fig. 2 is a block diagram of the game system in Fig. 1.

As shown in Figs. 1 and 2, the game system 1 according to the present embodiment includes a game apparatus 3 that performs game processing in response to an input signal from a controller 2. The game system 1 includes the controller 2 and the game apparatus 3 connectable to the controller 2 with a wire or wirelessly.

The controller 2 is connectable to an audio output device 4, such as headphones or earphones. In the present embodiment, the controller 2 is connectable to the headphones with a wire. The controller 2 includes a battery (not shown). The controller 2 is grippable with both hands of a user and operable by the user. In Fig. 1, the controller 2 is connected to the game apparatus 3 wirelessly. The controller 2 is connected to the audio output device 4 with a wire.

The game apparatus 3 is connectable to a display device 5 such as a television. The game apparatus 3 includes a central processing unit (CPU), a random-access memory (RAM), and a storage (e.g., a nonvolatile memory, an optical disc, or a magnetic disk), which are not shown. The game apparatus 3 can perform game processing in response to an input signal from the controller 2 and in accordance with a predetermined game program. The game apparatus 3 outputs the results of the game processing to the display device 5.

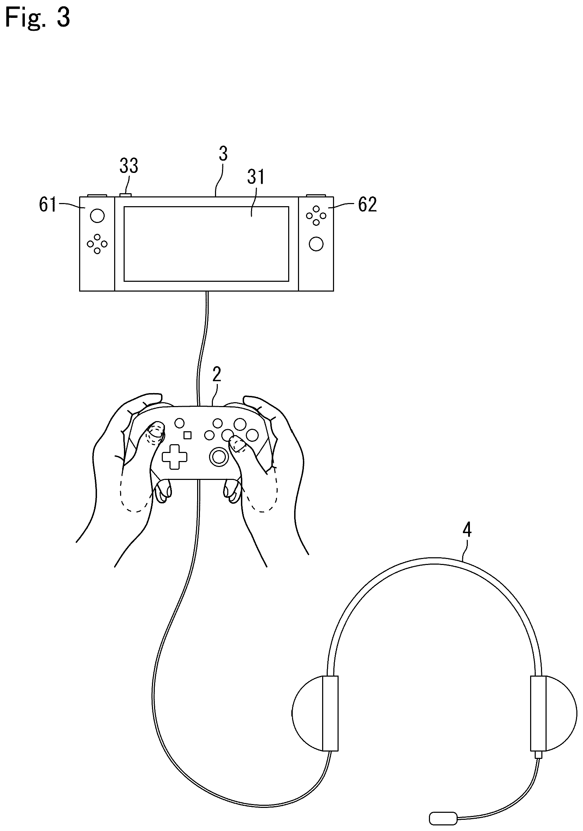

Fig. 3 is a schematic diagram of the game system 1, illustrating playing a game on the game apparatus 3.

As shown in Fig. 3, the game apparatus 3 includes a display 31. In Fig. 3, the controller 2 is connected to the game apparatus 3 with a wire. The controller 2 is connected to the audio output device 4 with a wire. The game apparatus 3 can perform game processing in response to an input signal from the controller 2 and in accordance with a predetermined game program. The game apparatus 3 causes the display 31 to display the results of the game processing.

As shown in Fig. 3, controllers 61 and 62 are detachably attached to the respective left and right ends of the game apparatus 3.

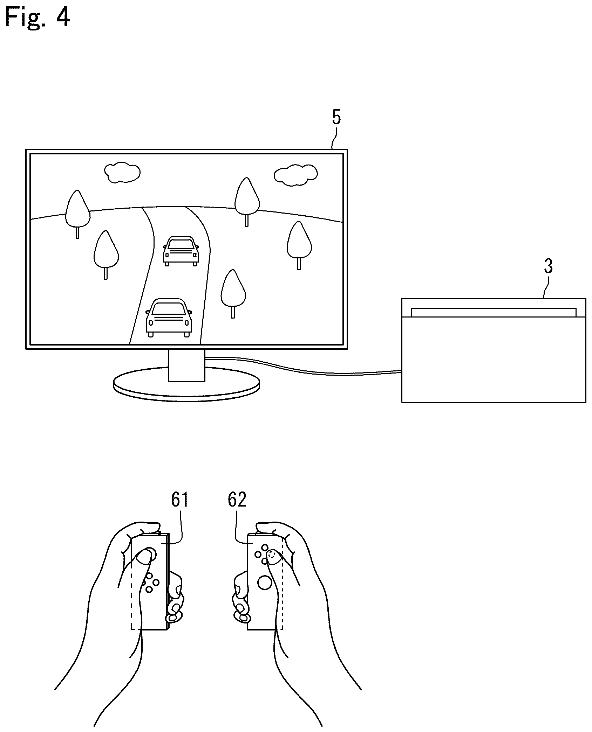

Fig. 4 is a schematic diagram of the game system 1, illustrating playing, with the controllers 61 and 62, a game on the game apparatus 3 connected to the display device 5.

As shown in Fig. 4, the game apparatus 3 is wirelessly connected to the controllers 61 and 62. The game apparatus 3 can perform game processing in response to an input signal from the controller 61 or the controller 62 and in accordance with a predetermined game program. The game apparatus 3 can also cause the display device 5 to display the results of the game processing. However, the controllers 61 and 62 cannot be connected to the audio output device 4.

As shown in Fig. 2, the game apparatus 3 includes a speaker 32 that outputs audio in response to an audio signal, and a volume adjuster 33 that adjusts the volume of an audio output. The volume adjuster 33 is, for example, a physical button on the game apparatus 3 or a touch operation portion serving as a user interface appearing on the display 31. The display device 5 includes a speaker 51 that outputs audio in response to an audio signal.

The game apparatus 3 further includes an audio signal output circuit 34 that outputs an audio signal, and a connection state detector 35 that detects a connection state of the controller 2 to the audio output device 4.

The audio signal output circuit 34 can output an audio signal to the speaker 32, the speaker 51, or the controller 2.

During an output of the audio signal, the audio signal output circuit 34 restricts the output of the audio signal in response to a disconnection of the controller 2 from the audio output device 4 being detected by the connection state detector 35. In the present embodiment, restricting the output of the audio signal refers to reducing or muting the output of the audio signal. When, for example, the battery in the controller 2 has no charge, the game apparatus 3 is wirelessly disconnected from the controller 2. In this case, the audio signal output circuit 34 restricts the output of the audio signal.

After restricting the output of the audio signal, the audio signal output circuit 34 removes the restriction on the output of the audio signal in response to a predetermined condition being satisfied.

More specifically, the audio signal output circuit 34 determines that the predetermined condition is satisfied in response to a connection of the controller 2 to the audio output device 4 being detected by the connection state detector 35 and to a reception of an input signal from the controller 2. The audio signal output circuit 34 then removes the restriction on the output of the audio signal. When, for example, the battery in the controller 2 is charged to reconnect the controller 2 to the audio output device 4, the connection state detector 35 detects the connection of the controller 2 to the audio output device 4. The audio signal output circuit 34 then removes the restriction on the output of the audio signal in response to an operation on any button or key on the controller 2 performed by the user.

The audio signal output circuit 34 determines that the predetermined condition is satisfied in response to a connection of another controller different from the controller 2 to the audio output device 4 being detected by the connection state detector 35 and to a reception of an input signal from the other controller. The audio signal output circuit 34 then removes the restriction on the output of the audio signal. Another controller is, for example, another controller 2 or a set of the controllers 61 and 62. When, for example, another controller is connected to the audio output device 4 due to no charge in the battery in the controller 2, the connection state detector 35 detects the connection of the other controller to the audio output device 4. The audio signal output circuit 34 then removes the restriction on the output of the audio signal in response to an operation on any button or key on the other controller performed by the user.

When another controller is the set of the controllers 61 and 62, the controllers 61 and 62 cannot be connected to the audio output device 4 as shown in Fig. 4. In this case, the audio signal output circuit 34 determines that the predetermined condition is satisfied in response to a reception of an input signal from the controller 61 or the controller 62. The audio signal output circuit 34 then removes the restriction on the output of the audio signal and outputs an audio signal to the speaker 32 in the game apparatus 3.

The audio signal output circuit 34 determines that the predetermined condition is satisfied in response to a connection of the controller 2 or another controller to the audio output device 4 being detected by the connection state detector 35 before a predetermined time elapses from the restriction on the output of the audio signal. The audio output device 4 then removes the restriction on the output of the audio signal. As described above, for example, a switching time, or a temporal disconnection between the controller 2 or the other controller and the game apparatus 3, can occur when their connection is switched from with a wire to wireless. When the controller 2 or the other controller is connected to the audio output device 4 before a predetermined time elapses from the restriction on the output of the audio signal, the connection between the controller 2 or the other controller and the game apparatus 3 may be switched from with a wire to wireless. In this case, the audio signal output circuit 34 determines that the predetermined condition is satisfied. The audio signal output circuit 34 then removes the restriction on the output of the audio signal and outputs an audio signal to the controller 2 or the other controller. A predetermined time may be set to any time greater than the switching time, such as three seconds. The game apparatus 3 may not switch to the other controller different from the connected controller 2 before a predetermined time elapses from the restriction on the output of the audio signal. More specifically, the game apparatus 3 may be reconnected to the controller 2 in response to the connection of the game apparatus 3 to the controller 2 being switched from with a wire to wireless.

The audio signal output circuit 34 determines that the predetermined condition is satisfied in response to no connection of the controller 2 or the other controller to the audio output device 4 being detected by the connection state detector 35 before a predetermined time elapses from the restriction on the output of the audio signal. The audio signal output circuit 34 then removes the restriction on the output of the audio signal after an elapse of the predetermined time. In this case, the controller 2 or the other controller is probably disconnected from the audio output device 4 before the predetermined time elapses from the restriction on the output of the audio signal. The audio signal output circuit 34 thus removes the restriction on the output of the audio signal and outputs an audio signal to the speaker 32 or the speaker 51.

The audio signal output circuit 34 may determine that the predetermined condition is satisfied in response to no connection of the controller 2 or the other controller to the audio output device 4 being detected by the connection state detector 35 before a predetermined time elapses from the restriction on the output of the audio signal and to a reception of an input signal from the volume adjuster 33 after an elapse of the predetermined time. The audio signal output circuit 34 may then remove the restriction on the output of the audio signal. The user possibly operates the volume adjuster 33 at a time at which the user intends to output audio from the game apparatus 3. In this case, the audio signal output circuit 34 may output an audio signal to the speaker 32.

The audio signal output circuit 34 may determine that the predetermined condition is satisfied in response to an elapse of the predetermined time. The audio signal output circuit 34 may then remove the restriction on the output of the audio signal.

The audio signal output circuit 34 may remove the restriction on the output of the audio signal after an elapse of the predetermined in response to a connection of the controller 2 or the other controller to the audio output device 4 being detected by the connection state detector 35 before a predetermined time elapses from restriction on the output of the audio signal. The audio signal output circuit 34 may then output an audio signal to the controller 2 or the other controller. As described above, for example, a switching time, or a temporal disconnection between the controller 2 or the other controller and the game apparatus 3, can occur when their connection is switched from with a wire to wireless. When the controller 2 or the other controller is connected to the audio output device 4 before a predetermined time elapses from the restriction on the output of the audio signal, the connection between the controller 2 or the other controller and the game apparatus 3 may be switched from with a wire to wireless. In this case, the audio signal output circuit 34 determines that the predetermined condition is satisfied in response to an elapse of the predetermined time. The audio signal output circuit 34 then removes the restriction on the output of the audio signal and outputs an audio signal to the controller 2 or the other controller.

The audio signal output circuit 34 may remove the restriction on the output of the audio signal after an elapse of the predetermined time in response to no connection of the controller 2 or the other controller to the audio output device 4 being detected by the connection state detector 35 before the predetermined time elapses from the restriction on the output of the audio signal. The audio signal output circuit 34 may then output an audio signal to the speaker 32 or the speaker 51. In this case, the audio signal output circuit 34 determines that the predetermined condition is satisfied in response to an elapse of the predetermined time. The audio signal output circuit 34 then removes the restriction on the output of the audio signal and outputs an audio signal to the speaker 32 or the speaker 51.

The game apparatus 3 may not switch to the other controller different from the connected controller 2 before a predetermined time elapses from the restriction on the output of the audio signal. More specifically, the game apparatus 3 may be reconnected to the controller 2 in response to the connection of the game apparatus 3 to the controller 2 being switched from with a wire to wireless.

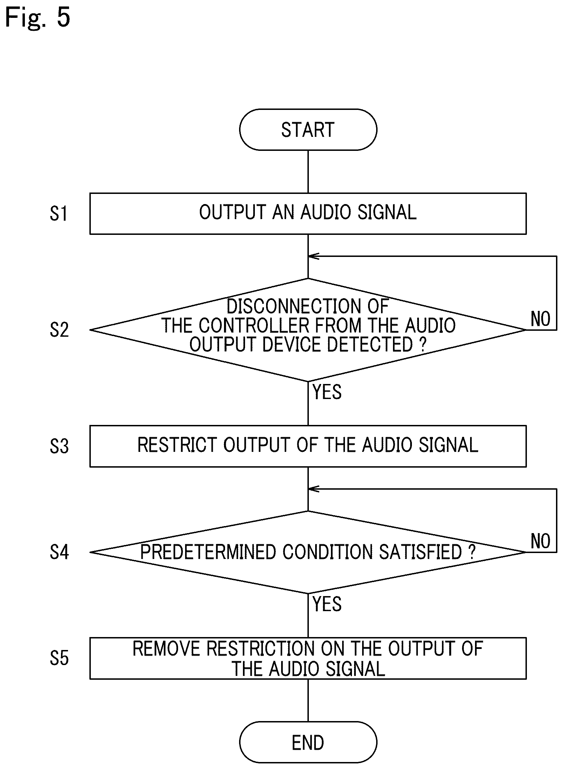

An example of a game audio output method according to the embodiment of the present disclosure will now be described. Fig. 5 is a flowchart of an example of the game audio output method according to the present embodiment.

As shown in Fig. 5, the audio signal output circuit 34 first outputs an audio signal (step S1).

The connection state detector 35 then determines a connection state of the controller 2 to the audio output device 4 (step S2).

When the connection state detector 35 detects a disconnection of the controller 2 from the audio output device 4 (Yes in step S2), the audio signal output circuit 34 restricts the output of an audio signal (step S3).

The audio signal output circuit 34 then determines whether the predetermined condition described above is satisfied (step S4).

When the predetermined condition is satisfied, the audio signal output circuit 34 removes the restriction on the output of the audio signal (step S5).

In the present embodiment, the audio signal output circuit 34 removes the restriction on the output of the audio signal in response to the predetermined condition being satisfied. This allows an audio output at a more appropriate time.

After restricting the output of the audio signal, the audio signal output circuit 34 removes the restriction on the output of the audio signal in response to a connection of the controller 2 to the audio output device 4 and to an operation on the controller 2 in the present embodiment. This allows an audio output at any time at which the user intends to restart the game without particularly paying attention to removing the restriction on an audio output.

The controller 2 may include no input circuit that indicates the restriction on the output of the audio signal or the removal of the restriction.

After restricting the output of the audio signal, the audio signal output circuit 34 removes the restriction on the output of the audio signal in response to a connection of another controller different from the controller 2 to the audio output device 4 and to an operation on the other controller in the present embodiment. This allows an audio output at any time at which the user intends to restart the game without particularly paying attention to removing the restriction on the output of an audio output.

In the present embodiment, the audio signal output circuit 34 outputs an audio signal to the speaker 51 in the display device 5 in response to a removal of the restriction on the output of the audio signal. This allows the speaker 51 in the display device 5 to output audio at any time at which the user intends to restart the game.

In the present embodiment, the audio signal output circuit 34 outputs an audio signal to the controller 2 or the other controller in response to a connection of the controller 2 or the other controller to the audio output device 4 before a predetermined time elapses from the restriction on the output of the audio signal. The audio signal output circuit 34 outputs an audio signal to the game apparatus 3 or the speaker 51 included in the display device 5 in response to no connection of the controller 2 or the other controller to the audio output device 4 before a predetermined time elapses from the restriction on the output of the audio signal. This allows an audio output at a more appropriate time.

In the present embodiment, the audio signal output circuit 34 removes the restriction on the output of the audio signal and outputs an audio signal to the speaker 32 in the game apparatus 3 in response to no connection of the controller 2 or the other controller to the audio output device 4 before an elapse of the predetermined time and to an operation on the volume adjuster 33 after an elapse of the predetermined time. This allows the speaker 32 in the game apparatus 3 to output audio at a more appropriate time intended by the user.

The present disclosure is not limited to this embodiment and may be modified in various manners. For example, the audio signal output circuit 34 can output an audio signal to the speaker 51 included in the display device 5 in this embodiment. However, the present disclosure is not limited to this embodiment. The audio signal output circuit 34 may output an audio signal to, for example, a speaker included in another device such as a Bluetooth (registered trademark) speaker or a universal serial bus (USB) speaker.

The game apparatus 3 may cause the display 31 or the display device 5 to display information indicating the restriction on the output of the audio signal or information indicating a method for removing the restriction in response to a disconnection of the audio output device 4 from the controller 2 connected to the audio output device 4. The user can thus learn any restriction on the output of the audio signal or a method for removing the restriction on the output of the audio signal based on the information displayed on the display 31 or the display device 5. The game apparatus 3 according to the embodiment allows an audio output at any time at which the user intends to restart the game without the user checking the information displayed on the display 31 or the display device 5.

The game apparatus 3 is, for example, a stationary game apparatus, a portable game apparatus, a smartphone, a tablet terminal, a mobile phone, a personal computer, or a wearable terminal.

Although not described above, the game apparatus 3 includes a processor. The processor is an information processor that performs various types of information processing operations performed in the game apparatus 3. The processor may include, for example, a CPU alone or a system on chip (SoC) including multiple functions such as a function performed by a CPU and a function performed by a graphics processing unit (GPU). The processor performs various information processing operations by executing information processing programs (e.g., a game program) stored in a storage. The storage may be an internal storage medium such as a flash memory and a dynamic RAM (DRAM), or an external storage medium attached to a slot (not shown).

The game apparatus 3 includes a controller communication unit to communicate with the controller 2 or the controllers 61 and 62 with wires or wirelessly. Although not shown, the controller 2 or the controllers 61 and 62 each include various buttons such as a cross-shaped key and ABXY buttons, and analog sticks.

Although the present disclosure is fully described in the embodiment with reference to the accompanying drawings, modifications or changes to the embodiment are apparent to those skilled in the art. Such modifications or changes are intended to fall within the present disclosure without departing from the scope of the present disclosure defined by the appended claims.

### INDUSTRIAL APPLICABILITY

The game apparatus according to one or more embodiments of the present disclosure can output audio at a more appropriate time. The game apparatus connected to, with a wire or wirelessly, a controller connectable to an audio output device is useful for performing game processing in response to an input signal from the controller.

### EXPLANATION OF REFERENCES

- 1: game system
- 2: controller
- 3: game apparatus
- 4: audio output device
- 5: display device
- 31: display
- 32: speaker
- 33: volume adjuster
- 34: audio signal output circuit
- 35: connection state detector
- 51: speaker
- 61, 62: controller

## Claims

1. A game apparatus (3) configured to connect via a wired or wireless connection to a controller (2) connectable to an audio output device (4) to perform game processing in response to an input signal from the controller (2), the game apparatus (3) comprising:
an audio signal output circuit (34) configured to output an audio signal; and
a connection state detector (35) configured to detect a connection state of the controller (2) to the audio output device (4), wherein
during an output of the audio signal, the audio signal output circuit (34) restricts the output of the audio signal in response to the connection state detector a disconnection between the controller (2) and the audio output device (4), and
the audio signal output circuit (34) removes the restriction on the output of the audio signal in response to a predetermined condition being satisfied.

2. The game apparatus (3) according to claim 1, wherein
the controller (2) does not include an input circuit that indicates restriction on an output of the audio signal or removal of the restriction.

3. The game apparatus (3) according to claim 1 or 2, wherein
after restricting the output of the audio signal, the audio signal output circuit (34) removes the restriction on the output of the audio signal in response to the connection state detector detecting a connection of the controller (2) to the audio output device (4) and receiving an input signal from the controller (2).

4. The game apparatus (3) according to claim 1 or 2, wherein
after restricting the output of the audio signal, the audio signal output circuit (34) removes the restriction on the output of the audio signal in response to the connection state detector (35) detecting a connection of another controller (61, 62) different from the controller (2) to the audio output device (4) and to a reception of an input signal from the other controller (61, 62).

5. The game apparatus (3) according to claim 1 or 2, wherein
the game apparatus (3) is connectable to another apparatus (5) including a speaker (51) that outputs audio in response to the audio signal, and
after restricting the output of the audio signal, the audio signal output circuit (34) outputs the audio signal to the speaker (51) in response to the connection state detector (35) detecting no connection of another controller (61, 62) different from the controller (2) to the audio output device (4) and to a removal of the restriction on the output of the audio signal.

6. The game apparatus (3) according to claim 1, wherein
the game apparatus (3) or another apparatus (61, 62) connectable to the game apparatus (3) comprises a speaker (32, 51) that outputs audio in response to the audio signal,
in response to the connection state detector (35) detecting a connection of the controller (2) or another controller (61, 62) different from the controller (2) to the audio output device (4) before a predetermined time elapses from the restriction on the output of the audio signal, the audio signal output circuit (4) removes the restriction on the output of the audio signal and outputs the audio signal to the controller (2) or the other controller (61, 62), and
in response to the connection state detector (35) detecting no connection of the controller (2) or the other controller (61, 62) to the audio output device (4) before the predetermined time elapses from the restriction on the output of the audio signal, the audio signal output circuit (4) removes the restriction on the output of the audio signal after an elapse of the predetermined time and outputs the audio signal to the speaker (32, 51).

7. The game apparatus (3) according to claim 1, further comprising:
a speaker (32) that performs an audio output in response to the audio signal; and
a display (31), wherein
after restricting the output of the audio signal, the audio signal output circuit (34) removes the restriction on the output of the audio signal in response to the connection state detector (35) detecting a connection of the controller (2) or another controller (61, 62) different from the controller (2) to the audio output device (4) and to a reception of an input signal from the controller (2) or the other controller (61, 62).

8. The game apparatus (3) according to claim 7, further comprising
a volume adjuster (33) that adjusts a volume of the audio output, wherein
after restricting the output of the audio signal, the audio signal output circuit (34) removes the restriction on the output of the audio signal and outputs the audio signal to the speaker (32) in response to the connection state detector (35) detecting no connection of the controller (2) or the other controller (61, 62) to the audio output device (4) and to a reception of an input signal from the volume adjuster (33).

9. The game apparatus (3) according to claim 1, wherein
the game apparatus (3) causes a display (31) included in the game apparatus (3) or a display device (5) connected to the game apparatus (3) to display information indicating restriction on an output of the audio signal or information indicating a method for removing the restriction in response to a disconnection of the audio output device (4) from the controller (2) connected to the audio output device (4).

10. A game system (1) performing game processing in response to an input signal from a controller (2),
the game system (1) comprising:
a controller (2) connectable to an audio output device (4); and
a game apparatus (3) connectable to the controller (2) with a wire or wirelessly,
the game apparatus (3) comprising:
an audio signal output circuit (34) configured to output an audio signal; and
a connection state detector (35) configured to detect a connection state of the controller (2) to the audio output device (4), wherein
during an output of the audio signal, the audio signal output circuit (34) restricts the output of the audio signal in response to the connection state detector (35) detecting a disconnection between the controller (2) and the audio output device (4), and
the audio signal output circuit (34) removes the restriction on the output of the audio signal in response to a predetermined condition being satisfied.

11. A game audio output method for a game apparatus (3) that is configured to connect via a wired or wireless connection to a controller (2) connectable to an audio output device (4) to perform game processing in response to an input signal from the controller (2),
the method comprising:
restricting the output of the audio signal in response to the connection state detector detecting a disconnection of the controller (2) from the audio output device (4) while the game apparatus (3) is outputting the audio signal; and
removing the restriction on the output of the audio signal in response to a predetermined condition being satisfied.
